# EUROPÄISCHE PATENTSCHRIFT

(11) **EP 2 350 411 B1**
(45) Veröffentlichungstag und Bekanntmachung des Hinweises auf die Patenterteilung: **09.04.2014**
(21) Anmeldenummer: 09764766.3
(22) Anmeldetag: 20.11.2009
(51) Int. Cl.: B29C 45/53, E05B 81/78, E05B 85/16

(54) **TÜRGRIFF MIT VERGOSSENER ELEKTRONIKKOMPONENTE, SOWIE EIN ENTSPRECHENDES FERTIGUNGSVERFAHREN**
DOOR HANDLE WITH CAST ELECTRONIC COMPONENT, AND CORRESPONDING MANUFACTURING METHOD
POIGNÉE DE PORTIÈRE DOTÉE DE COMPOSANTS ÉLECTRONIQUES ENROBÉS, ET PROCÉDÉ DE FABRICATION CORRESPONDANT

(30) Priorität: 20.11.2008 DE 102008058341; 17.02.2009 DE 102009009341; 18.02.2009 DE 102009009396
(43) Veröffentlichungstag der Anmeldung: 03.08.2011
(73) Patentinhaber: Huf Hülsbeck & Fürst GmbH & Co. KG, 42551 Velbert (DE)
(72) Erfinder: LÖW, Matthias, 40855 Ratingen (DE); MÖNIG, Stefan, 58332 Schwelm (DE)
(86) Internationale Anmeldenummer: PCT/EP2009/065589
(87) Internationale Veröffentlichungsnummer: WO 2010/057999

(56) Entgegenhaltungen:
- EP-A- 1 454 731
- EP-A2- 1 035 276
- DE-A1- 10 256 842
- US-A- 5 690 884

## Beschreibung

Die vorliegende Erfindung ist auf eine Handhabe, insbesondere für ein Fahrzeug, gemäß dem Oberbegriff des Anspruchs 1 gerichtet mit einem vom Benutzer zu erfassenden Griffteil, wobei das Griffteil eine Höhlung aufweist, in der wenigstens eine Elektronikkomponente anordbar ist, und zumindest ein erstes Funktionsteil eine Öffnung der Höhlung verschließt, und die Höhlung mit einer Vergussmasse vergossen ist. Ferner ist die Erfindung auch auf ein Verfahren zur Fertigung einer Handhabe gemäß dem Oberbegriff des Anspruchs 12 gerichtet.

Aus dem Stand der Technik sind derartige Handhaben, insbesondere bei Kraftfahrzeugen, bekannt, wobei die Elektronikkomponente dazu dient, das Sicherheitssystem oder die Zentralverriegelung des Kraftfahrzeuges anzusteuern. In der Druckschrift EP 1 454 731 A1 ist eine gattungsgemäße Handhabe sowie ein Herstellverfahren für eine derartige Handhabe beschrieben. Damit die Elektronikkomponente vor äußeren Umwelteinflüssen geschützt ist, wird diese innerhalb der Höhlung des Griffteils mit einer Vergussmasse umhüllt.

Beim Ausgießen der Höhlung mit der Vergussmasse entstehen jedoch leicht unerwünschte Gaseinschlüsse, die einerseits zu Korrosionsproblemen an der elektronischen Komponente, insbesondere den leitenden Verbindungen, führen können und andererseits auch die Stabilität der Handhabe selber verschlechtern.

Somit ist es Aufgabe der vorliegenden Erfindung, eine Handhabe zu schaffen, die sich durch eine hohe Stabilität und Langlebigkeit, insbesondere was die Funktionalität der Elektronikkomponente angeht, auszeichnet.

Die zuvor genannte Aufgabe wird durch die Merkmale des Hauptanspruchs, insbesondere vom kennzeichnenden Teil, gelöst. Ferner sind in den abhängigen Ansprüchen 2 bis 11 bevorzugte Ausführungsformen der erfindungsgemäßen Handhabe aufgeführt.

Es sei an dieser Stelle erwähnt, dass im folgenden Text von einer senkrechten Ausrichtung des Griffteils ausgegangen wird, wenn eine geometrische Bezugnahme erfolgt.

Bei der erfindungsgemäßen Handhabe ist es vorgesehen, dass ein Befüllungselement vorgesehen ist, durch welches die Vergussmasse von außen in die Höhlung des Griffteils einführbar ist, wobei das Befüllungselement bei einer senkrechten Ausrichtung des Griffteils im unteren Bereich der Höhlung endet. Durch den Einsatz des zusätzlichen Befüllungselementes kann die Vergussmasse von unten in die Höhlung eingeleitet werden und dort langsam der Höhe nach aufsteigen. Da die Vergussmasse selbst gasfrei und homogen in das Befüllungselement eingeleitet wird, lassen sich somit Blasenbildungen und Gaseinschlüsse beim Ausfüllen der Aushöhlung durch die Vergussmasse sicher verhindern. Durch die Verwendung des zusätzlichen Befüllungselementes kann somit die Handhabe unabhängig von einer Position eines Einfülllochs für die Vergussmasse stets von unten befüllt werden.

Ferner kann es vorgesehen sein, dass das erste Funktionsteil eine obere Öffnung der Höhlung verschließt und das Befüllungselement von oben mehr oder weniger senkrecht durch das Griffteil bzw. die Höhlung bis zum unteren Bereich der Höhlung angeordnet ist. Dabei weist üblicherweise ein derartiges Befüllungselement einen Innendurchmesser von 1 - 10 mm, bevorzugt zwischen 6 und 2 mm, auf. In der Praxis hat sich ein Innendurchmesser für das Befüllungselement von 3 mm als besonders vorteilhaft herausgestellt, wobei sich optimale Druckverhältnisse und Fließgeschwindigkeiten in der Vergussmasse einstellen. Das zuvor erwähnte Funktionsteil kann selber einen Griffdom oder ein Grifflager für die Handhabe aufweisen. Allerdings kann es auch nur zum Verschließen der Öffnung im Griffteil dienen. Das Funktionsteil selbst kann über eine Dichtung, wie z. B. einen Ohring, eine Labyrinthdichtung oder eine Lamellendichtung, gas- und/oder druckdicht die entsprechende Öffnung verschließen. Sofern nur eine Öffnung im Griffteil vorgesehen ist, wird die vorhandene Elektronikkomponente über diese Öffnung in die Höhlung eingeführt. Dabei kann die Elektronikkomponente an einem Träger am Funktionsteil befestigt sein.

Auch ist es denkbar, dass die Höhlung im Griffteil eine weitere Öffnung aufweist, die insbesondere durch ein zweites Funktionsteil verschließbar ist. Auch dieses Funktionsteil kann einen Griffdom oder ein Grifflager ausbilden. Die Funktionsteile selber werden z. B. über Rast- und/oder Haltemittel unter einander und/oder mit dem Griffteil befestigt, wodurch sich insbesondere ein gas- und/oder feuchtigkeitsdichter Abschluss der jeweiligen Öffnung erzielen lässt. Bei einer besonderen Variante der vorliegenden Erfindung werden die beiden Funktionsteile untereinander innerhalb des Griffteiles mit den erwähnten Rast- und/oder Haltemittel sicher verbunden. Zusätzlich können auch weitere Rast- und/oder Haltemittel im Griffteil selber angeordnet sein, die mit entsprechenden Gegenrast- und/oder Gegenhaltemitteln an den Funktionsteilen zusammenwirken. Als Rastmittel können Hinterschneidungen und hakenförmige- sowie Clips-Verbindungen dienen. Die Haltemittel können Schraub-, Niet-, Klebe- und/oder Schweißverbindungen umfassen.

Um eine optimale Fließeigenschaft der Vergussmasse innerhalb des Befüllungselementes und anschließend in der Höhlung im Griffelement zu ermöglichen, kann ein Heizelement, insbesondere in Form eines elektrischen Widerstandsdrahtes, vorgesehen sein. Dieser Widerstandsdraht kann gerade verlaufend zum Befüllungselement angeordnet sein oder dieses gewindeartig umwickeln. Das entsprechende Heizelement kann - genauso wie das Befüllungselement - nach dem Verfüllprozess in dem Griffteil verbleiben. Dabei ist es sogar denkbar, dass das Heizelement ein Teil der Elektronikkomponente, z.B. der einer Antenne oder einem kapazitiven Sensor, darstellt. Das Heizelement kann somit über eine elektrische Leitung mittels eines Steckers, der während des bestimmungsgemäßen Gebrauchs der Handhabe die Elektronikkomponente mit der übrigen Fahrzeugelektronik verbindet, im Verfüllprozess mit Energie versorgt werden.

Sofern die Elektronikkomponente mehrteilig aufgebaut ist, kann diese über die beiden Funktionsteile innerhalb der Höhlung im Griffteil fixiert werden. Dafür ist es zweckmäßig, wenn beide Funktionsteile über einen entsprechenden Träger verfügen, der materialeinheitlich und einstückig zum Funktionsteil ausgestaltet sein kann. Die entsprechenden Funktionsteile können als Kunststoffspritzgussteile hergestellt sein.

Zur Erleichterung des Verfüllprozesses mit der Vergussmasse kann ein Ansatzstutzen für das Befüllungselement vorgesehen sein, wodurch die Vergussmasse von außen - über eine entsprechende Spritzvorrichtung für die Vergussmasse - einführbar ist. Dieser Ansatzstutzen ermöglicht ein einfaches und sicheres, verlustfreies Ansetzen der Spritzvorrichtung an die Handhabe bzw. das Befüllungselement. Zweckmäßigerweise ist es vorgesehen, dass das Befüllungselement durch wenigstens ein Funktionsteil geführt ist und/oder daran angeordnet ist. Der zuvor erwähnte Ansatzstutzen ist dabei von außen zugänglich an dem entsprechenden Funktionsteil angeordnet. Der Ansatzstutzen kann über eine Sollbruchstelle verfügen, mit Hilfe dessen er nach dem Befüllen der Höhlung auf einfache Art und Weise von der Handhabe abtrennbar ist. Somit kann vermieden werden, dass der Ansatzstutzen später bei einer Montage der Handhabe an einem Fahrzeug störend in Erscheinung tritt.

Das Befüllungselement kann selbst durch einen flexiblen bzw. starren Schlauch oder einen Kanal gebildet werden. Auch ist es denkbar, dass eine Kombination aus Schlauch und Kanal für das Befüllungselement vorgesehen ist. Dabei kann eine Verbindung zwischen dem eingesetzten Schlauch und dem Kanal durch ein Kupplungsstück ermöglicht werden. Eine Kupplung von Schlauch und Kanal kann vor dem Einführen des Befüllungselementes in die Höhlung realisiert werden. Zweckmäßigerweise kann das Kupplungsstück auch derart ausgestaltet sein, dass eine selbstständige Kupplung zwischen Schlauch und Kanal stattfindet, wenn das entsprechende Gegenelement z.B. durch ein Funktionsteil in die Höhlung des Griffteils eingeführt wird. Hierzu ist es erforderlich, dass dann der Schlauch oder der Kanal an dem Funktionsteil ausgebildet ist, wobei das Gegenelement an dem weiteren Funktionsteil oder dem Griffteil selber vorhanden ist.

Sofern ein Kanal als Befüllungselement vorgesehen ist, kann dieser im Griffteil und/oder einem oder beiden Funktionsteilen ausgebildet sein. Bei einem zwei- oder mehrteiligen Kanal kann ein Verbindungsstück vorgesehen sein, um die beiden Kanalteile miteinander flüssigkeitsdicht zu verbinden. Auch diese Verbindungsstücke sind vorteilhafterweise derart ausgestaltet, dass eine automatische Verbindung stattfindet, wenn das entsprechende Funktionsteil in das andere Funktionsteil oder in das Griffteil eingeführt wird. Auch ist es denkbar, dass der Kanal als Bohrung im Griffteil und/oder in einem Funktionsteil ausgebildet ist.

Sofern ein Schlauch als Befüllungselement vorgesehen ist, kann dieser im Griffteil und/oder im Funktionsteil fixiert oder eingegossen sein. Eine Fixierung des Schlauchs kann über Clipse oder eine Ω-förmige (omegaförmige) Aufnahme vorgesehen sein, die über einen sich verjüngenden Öffnungsspalt verfügt, durch den der in der Öffnung vorgesehene Schlauch formschlüssig fixiert wird.

Um den Befüllungsprozess optimal auszugestalten, ist es vorgesehen, dass im oberen Bereich der Höhlung zumindest ein Entlüftungsloch im Griffteil oder dem ersten Funktionsteil vorgesehen ist, durch das eine Entlüftung der Höhlung beim Ausfüllen mit der Vergussmasse möglich ist. Zweckmäßigerweise ist das Entlüftungsloch möglichst weit oben vorzusehen, damit die Höhlung vollständig mit Vergussmasse ausgefüllt ist.

Weiterhin ist es Aufgabe der vorliegenden Erfindung, ein Verfahren zur Fertigung einer Handhabe bereitzustellen, welches unabhängig von der Ausgestaltung und Konstruktion der Handhabe ein optimales Befüllen der Höhlung mit einer Vergussmasse ermöglicht.

Die vorgenannte Aufgabe wird durch ein Verfahren mit den technischen Merkmalen aus dem Anspruch 12, insbesondere aus dem kennzeichnenden Teil, gelöst. Vorteilhafte Ausgestaltungen des Verfahrens sind in den abhängigen Ansprüchen 13 bis 15 aufgeführt.

Das erfindungsgemäße Verfahren zur Fertigung einer Handhabe gemäß des Oberbegriffs von Anspruch 12 zeichnet sich dadurch aus, dass die nachfolgenden Schritte durchgeführt werden:
a) die Elektronikkomponente wird in die Höhlung des Griffteils eingeführt
b) die Öffnung der Höhlung wird durch das Funktionsteil verschlossen
c) das Griffteil wird in eine im Wesentlichen senkrechte Ausrichtung überführt
d) die Vergussmasse wird von außen mittels eines Befüllungselementes nach unten in die Höhlung geleitet und tritt dort aus dem Befüllungselement aus.

Dabei kann zumindest die zeitlich Reihenfolge der Schritte a) bis c) beliebig variieren. Somit ist es möglich, auch ein Griffteil mit nur einer oberen Öffnung sicher und zuverlässig mittels einer Vergussmasse auszufüllen. Dabei kann das Befüllungselement im Wesentlichen senkrecht von oben nach unten in der Höhlung angeordnet sein oder im unteren Bereich von außen durch das Griffteil in die Höhlung verlaufen.

Sofern die Höhlung insgesamt zwei Öffnungen aufweist, nämlich eine untere und eine obere Öffnung, kann in einem weiteren Schritt b1) ein zweites Funktionsteil die zusätzliche Öffnung verschließen. Ebenfalls ist es denkbar, dass Schritt a) und b) gleichzeitig erfolgen, wobei wenigstens eine Elektronikkomponente, z.B. durch einen Träger, vom ersten und/oder zweiten Funktionsteil gehalten wird. Somit wird gleichzeitig beim Verschließen der jeweiligen Öffnung durch das Funktionsteil die Elektronikkomponente in die Öffnung des Griffteils eingeführt. Die Vergussmasse selbst kann von oben durch das Befüllungselement in das Griffteil gelangen und nach unten in die Höhlung geleitet werden und dort aus dem Befüllungselement austreten und von da aus in der Höhlung hochsteigen. Somit wird die Vergussmasse im Gegenstromprinzip die Höhlung ausfüllen. Auf diese Art und Weise ist ein optimales Ausgießen der Höhlung mit der Vergussmasse möglich. Insbesondere kann hierbei ein zusätzliches Heizelement für ein gleichmäßiges Temperieren der Vergussmasse dienen.

Weitere Vorteile, Merkmale und Einzelheiten ergeben sich aus der nachfolgenden Beschreibung, in der unter Bezugnahme auf die Zeichnungen mehrere Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Merkmale und Details, die im Zusammenhang mit dem erfindungsgemäßen Verfahren beschrieben sind, gelten dabei selbstverständlich auch im Zusammenhang mit der erfindungsgemäßen Vorrichtung und umgekehrt. Es zeigen:
- Figur 1: stellt eine erfindungsgemäße Handhabe mit einem Schlauch als Befüllungselement im Längsschnitt beim Befüllungsprozess schematisch dar,
- Figur 2: eine weitere erfindungsgemäße Handhabe, vergleichbar zu Figur 1, mit einem zweiteiligen Kanal in den beiden Funktionsteilen,
- Figur 3: eine Ausschnittsvergrößerung des Längsschnitts aus Figur 2,
- Figur 4: ein weiteres Ausführungsbeispiel der erfindungsgemäßen Handhabe, vergleichbar zu den Figuren 1 und 2, mit einem kombinierten Füllungselement,
- Figur 5a: beispielhafter Querschnitt I-I durch Figur 4,
- Figur 5b: beispielhafter Querschnitt II-II durch Figur 4,
- Figur 5c: beispielhafter Querschnitt III-III durch Figur 4,
- Figur 6: Draufsicht auf ein weiteres Ausführungsbeispiel eines zweiten Funktionsteils mit einem daran befestigten Befüllungselement,
- Figur 7: beispielhafter Querschnitt IV-IV durch Figur 6,
- Figur 8: rechte Seitenansicht, eines weiteren Ausführungsbeispiels eines zweiten Funktionsteils mit einem integrierten Befüllungselement,
- Figur 9: teilweiser Längsschnitt, durch eine weitere erfindungsgemäße Handhabe, vergleichbar zu Figur 1, mit einem kurzen Kanal als Befüllungselement beim Befüllungsprozess,
- Figur 10: eine Ausschnittsvergrößerung des Längsschnitts aus Figur 9 und
- Figur 11: eine vergleichbare Ausschnittsvergrößerung des Längsschnitts aus Figur 9 mit einem veränderten Ansatzstutzen.

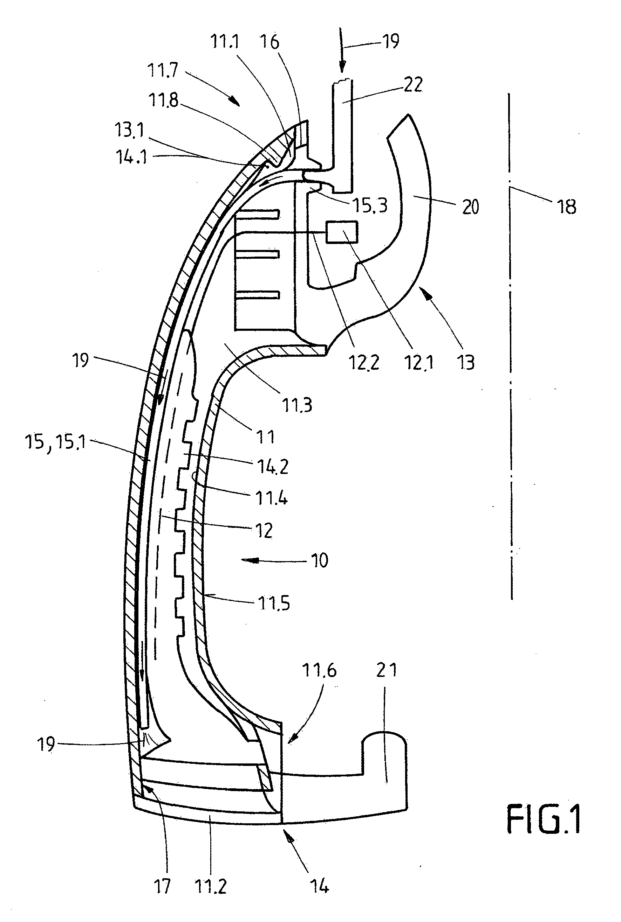

In der Figur 1 ist eine erfindungsgemäße Handhabe 1 beim Befüllungs-/ oder Verfüllprozess dargestellt. Um die wesentlichen Merkmale sichtbar zu machen, ist zumindest das vorhandene Griffteil 11 längs geschnitten gezeichnet. Um das Befüllen der Höhlung 11.3 in Griffteil 11 zu ermöglichen, werden zuvor die beiden vorhandenen Öffnungen 11.1 und 11.2 durch die vorgesehenen Funktionsteile 13 und 14 verschlossen. An dem unteren Funktionsteil 14 ist ein Träger 14.2 angeordnet, der eine Elektronikkomponente 12 hält. Von dieser Elektronikkomponente 12 geht eine elektrische Leitung 12.2 zum oberen Bereich 11.7 des Griffteils und endet an einem Stecker 12.1, über den die Elektronikkomponente 12 später mit der Fahrzeugelektronik verbunden wird. Nachdem nun die beiden Öffnungen 11.1 und 11.2 mit den jeweiligen Funktionsteilen 13 und 14 verschlossen sind, wird eine externe Spritzvorrichtung 22 mit einer Vergussmasse 19 an einem Ansatzstutzen 15.3 eines Befüllungselementes 15 angesetzt. Das Befüllungselement 15 ist im vorliegenden Fall als flexibler Schlauch 15.1 ausgestaltet und erstreckt sich senkrecht vom oberen Bereich 11.7 bis zum unteren Bereich 11.6 des Griffteils 11. Im oberen Bereich 11.7 mündet das Befüllungselement 15 in dem Ansatzstutzen 15.3, der am oder im ersten Funktionsteil 13 gebildet ist. Der entsprechende Schlauch 15.1 kann beispielsweise an dem ersten Funktionsteil 13 angeschweißt oder angespritzt sein. Die beiden Funktionsteile 13 und 14 werden im Griffteil 11 über Rastmittel/Haltemittel 11.8 bzw. Gegenrastmittel/ Gegenhaltemittel 13.1 und 14.1 an den Funktionsteile 13 und 14 formschlüssig gehalten. Das erste Funktionsteil 13 weist ein Grifflager 20 auf, wodurch die Handhabe 10 schwenkbar am Fahrzeug, insbesondere einem beweglichen Teil, wie z.B. einer Tür, befestigt ist. Das zweite Funktionsteil 14 weist einen Griffdom 21 auf, mit dem eine mechanische Betätigung eines Türschlosses möglich ist. Auch ist es denkbar, dass die erfindungsgemäße Handhabe 10 starr an dem beweglichen Teil des Fahrzeuges angeordnet ist.

Bevor mit dem Befüllungsprozess begonnen wird, wird die Handhabe 10 in eine im Wesentlichen senkrechte Ausrichtung 18 überführt. Vorher oder danach wird die Elektronikkomponente 12 in die Höhlung 11.3 des Griffes 11 eingeführt. Dieser Schritt erfolgt im vorliegenden Ausführungsbeispiel gleichzeitig durch das Verschließen der Öffnung 11.2 durch das Funktionsteil 14, da die Elektronikkomponente 12 selber in dem Träger 14.2 des Funktionsteils 14 befestigt ist. Wird nun der Befüllungsprozess eingeleitet, so fließt die Vergussmasse 19 zunächst durch eine Düse der Spritzvorrichtung 22 in den Ansatzstutzen 15.3 und von dort aus weiter durch das als Schlauch 15.1 ausgestaltete Befüllungselement 15 von oben nach unten in die Höhlung 11.3 und tritt dort im unteren Bereich 11.6 aus dem Schlauch 15.1 aus. Von da aus steigt die Vergussmasse 19 - gegen ihre bisherige Strömungsrichtung - der Höhe nach an, wodurch die Höhlung 11.3 sukzessive gefüllt wird. Damit die vorhandene Luft bzw. das Gas in der Höhlung 11.3 entweichen kann, ist im oberen Bereich 11.7 ein Entlüftungsloch 16 im ersten Funktionsteil 13 vorgesehen. Optional kann das Entlüftungsloch 16 zusätzlich oder auch nur im Griffteil 11 vorgesehen sein. Der Schlauch 15.1 kann bei dem vorliegenden Ausführungsbeispiel gleichzeitig mit dem ersten Funktionsteil 13 in die Höhlung 11.3 eingeführt werden und wird entlang einer Innenwand 11.4 und dem Träger 14.2 randseitig geführt.

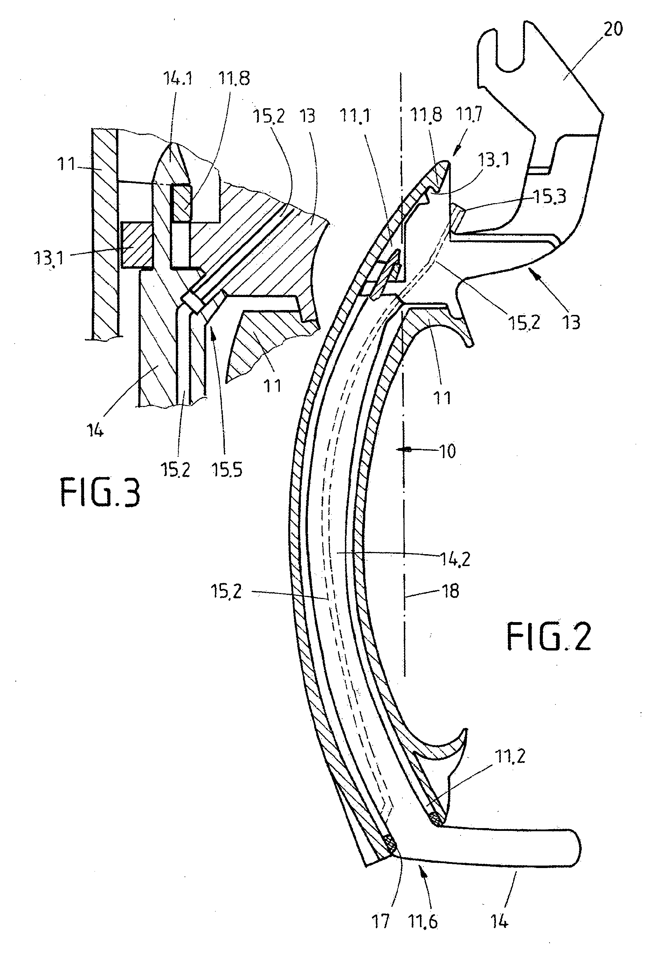

In der Figur 2 wird ein weiteres Ausführungsbeispiel der erfindungsgemäßen Handhabe 10 gezeigt. In diesem Beispiel ist das Befüllungselement 15 durch einen zweiteiligen Kanal 15.2 ausgebildet, der im ersten und zweiten Funktionsteil 13 und 14 integriert ist. Die beiden Funktionsteile 13 und 14 sind in der Höhlung 11.3 jeweils über die Rastmittel bzw. Gegenrastmittel 13.1 und 14.1 untereinander befestigt, wobei zusätzlich eine Befestigung an den Rastmitteln 11.8 stattfinden kann. In der Figur 3 ist eine Ausschnittsvergrößerung von diesem Bereich dargestellt. Wie aus der Figur 2 weiter erkennbar ist, ist die senkrecht gelagerte Handhabe 10, die sich im Wesentlichen entlang der senkrechten Linie 18 erstreckt, ebenfalls mit einem Ansatzstutzen 15.3 am ersten Funktionsteil 13 versehen. Dieser Ansatzstutzen 15.3 weist eine Sollbruchstelle auf, um diesen nach dem Befüllungsprozess entfernen zu können. Im unteren Bereich ist das zweite Funktionsteil 14 über eine ringförmige Dichtung 17 in der zweiten Öffnung 11.2 abgedichtet. Ebenfalls ist an dem zweiten Funktionsteil 14, insbesondere dem Träger 14.2, die Elektronikkomponente 12 gehalten oder in diesem integriert. Diese Elektronikkomponente 12 kann drahtlos in Verbindung mit der übrigen Fahrzeugelektronik verbunden sein.

In der Figur 3 wird näher gezeigt, wie die beiden Funktionsteile 13, 14 mit den jeweiligen Kanälen 15.2 über ein Verbindungsstück 15.5 miteinander verbunden sind. Dabei ist im zweiten Funktionsteil 14 eine vertiefende Öffnung eingearbeitet, die in den Kanal 15.2 übergeht. In diese Öffnung ragt eine rohrartige Ausbuchtung des ersten Funktionsteils 13 hinein, die mit dem Kanal 15.2 im ersten Funktionsteil 13 verbunden ist. Zunächst wird das erste Funktionsteils 13 von oben in die erste Öffnung 11.1 eingeführt, wobei das Rastmittel 13.1, welches eine Schlaufe oder einen Durchbruch umfasst, unterhalb des am Griffteil 11 angeordneten Haltemittel 11.8 positioniert wird. Dabei ragt die rohrartige Ausbuchtung des ersten Funktionsteils 13 schräg nach unten in die Höhlung 11.3 hinein. Anschließend wird nun das zweite Funktionsteil 14 von unten in das Griffteil 11 bzw. die untere Öffnung 11.2 eingeführt. Bei diesem Schritt durchgreift oder durchdringt das Gegenrastmittel 14.1, welches einen federnden, hakenförmigen Vorsprung bzw. Clips umfasst, von unten zunächst das (Gegen-)Rastmittel 13.1 und anschließend das Rastmittel 11.8. Hierdurch sind die beiden Funktionsteil 13, 14 formschlüssig innerhalb des Griffteils 11 sicher miteinander verbunden und gleichzeitig am Griffteil 11 über das Rastmittel 11.8, welches eine Schlaufe oder einen Durchbruch umfasst, befestigt. Durch Einführen des zweiten Funktionsteils 14 von unten in die zweite Öffnung 11.2 wird auch die Öffnung des Verbindungsstücks 15.5 über die rohrartige Ausbuchtung des Gegenverbindungsstücks 15.5 vom ersten Funktionsteil 13 geschoben, wodurch eine sichere Verbindung zwischen den beiden Kanälen 15.2 geschaffen ist. Zusätzlich kann das Verbindungsstück 15.5 eine Dichtung aufweisen. Eine komplizierte Justierung oder Kopplung der beiden Kanalteile 15.2 ist somit bei dieser Ausführungsform nicht erforderlich.

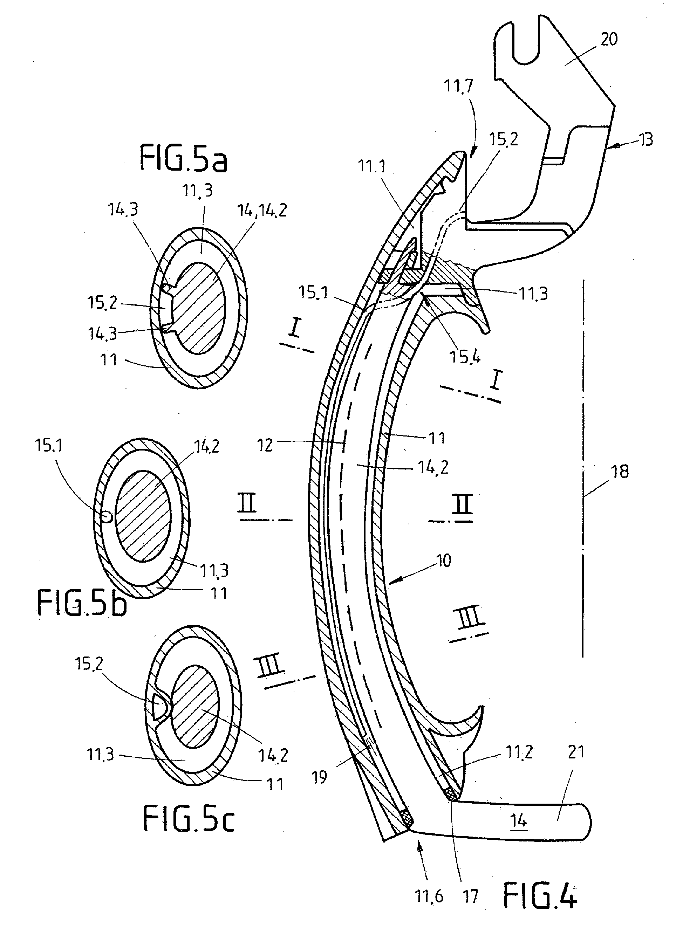

In der Figur 4 ist ein Ausführungsbeispiel der erfindungsgemäßen Handhabe 10 mit einem unterschiedlich ausgestalteten Befüllungselement 15 dargestellt. Dieses dient im Wesentlichen zur Erläuterung der Erfindung, wobei eine derartige Kombination der einzelnen unterschiedlich ausgestalteten Befüllungselemente 15 in der Praxis sehr wahrscheinlich nicht vorgenommen wird. In dem ersten Funktionsteil 13 ist ein Kanal 15.2 als Befüllungselement 15 vorgesehen, welcher in einen Schlauch 15.1 im zweiten Funktionsteil 14 übergeht. Zur Verbindung der beiden unterschiedlichen Befüllungselementen 15.1 und 15.2 ist ein Kupplungsstück 15.4 vorgesehen, um - wie in Figur 3 - eine selbstständige Kupplung zwischen den beiden Teilen des Befüllungselementes 15 vorzunehmen. Vor dem Querschnitt I-I (von oben aus betrachtet) geht das schlauchförmige Befüllungselement 15.1 in den Kanal 15.2 über, der vergrößert in der Figur 5a gezeigt ist. Dieser Kanal 15.2 ist durch das zweite Funktionsteil 14 und die Innenwand 11.4 des Griffteils 11 gebildet. Dazu ragen zwei dichtlippenartige Ausbuchtungen 14.3, Dichtungsstege oder -/lippen 14.3 vom Träger 14.2 an die Innenwand 11.4, wodurch ein im Wesentlichen rechteckförmiger Querschnitt des als Kanal 15.2 gebildeten Befüllungselementes 15 vorhanden ist. Um eine bessere Abdichtung zwischen dem Träger 14.2 und der Innenwand 11.4 zu erreichen, kann die Innenwand 11.4 entsprechende Ausnehmung für die Dichtungsstege oder -/lippen 14.3 des Trägers 14.2 aufweisen. Auch ist es denkbar, dass an der gegenüberliegenden Seite der Dichtungsstege oder -/lippen 14.3 am Träger 14.2 weitere Ausbuchtungen vorgesehen sind, womit ein Anpressdruck zwischen dem Griffteil 11 und dem Träger 14.2 erzielbar ist.

In der weiteren Figur 5b ist ebenfall ein weiterer, vergrößerter Querschnitt II-II dargestellt. Dabei liegt das Befüllungselement 15 als flexibler Schlauch 15.1 an der Innenwand 11.4 der Höhlung 11.3 an. Dieses Befüllungselement 15 kann wieder in einen Kanal 15.2 im Querschnitt III-III aus Figur 4 übergehen. In der Figur 5c ist eine Vergrößerung dieses Querschnitt III-III dargestellt. Dabei ist der Kanal 15.2 innerhalb des Griffteils 11 ausgestaltet bzw. in diesen integriert. Somit wird dieser Kanal 15.2 bereits bei der Fertigung des Griffteils 13 hergestellt, welches vorzugsweise als Kunststoffspritzgussteil ausgestaltet ist.

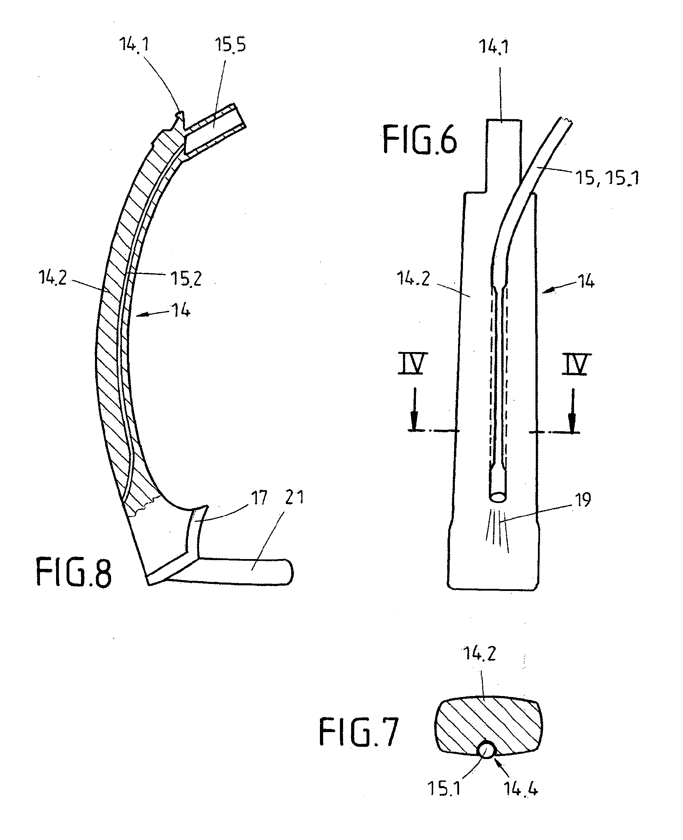

In der Figur 6 ist ein weiteres Ausführungsbeispiel der Erfindung dargestellt, wobei nur das zweite Funktionsteil 14 in Draufsicht gezeigt ist. Bei diesem Ausführungsbeispiel kommt ein Befüllungselement 15 zum Einsatz, welches als Schlauch 15.1 vorhanden ist. Um diesen Schlauch 15.1 mit dem zweiten Funktionsteil 14 von unten in die zweite Öffnung 11.2 einzuführen, ist der Schlauch 15.1 an dem Funktionsteil 14 befestigt oder fixiert. Hierzu ist eine Aufnahme 14.4 oberflächenseitig an dem Funktionsteil 14 angeordnet, die im Wesentlichen omegaförmig ausgestaltet ist. In diese Aufnahme 14.4 wird der Schlauch 15.1 hineingedrückt oder längsseits eingeschoben und somit durch das zweite Funktionsteil 14 fixiert, bevor der Verbund aus dem zweiten Funktionsteil 14 und dem Schlauch 15.1 in die Höhlung 11.3 eingeführt wird. In der Figur 6 ist die Aufnahme 14.4 im mittleren Bereich des Trägers 14.2 vorgesehen, wobei sich diese z.B. auch komplett von oben nach unten an dem zweiten Funktionsteil 14 oder auch nur abschnittsweise erstrecken kann.

In der Figur 7 ist ein Querschnitt IV- IV durch das zweite Funktionsteil 14 aus Figur 6 dargestellt. In der Figur 7 ist die omegaförmige Aufnahme 14.4 zu erkennen, die einen sich verjüngenden Öffnungsspalt zu Oberfläche hin aufweist, durch den der Schlauch 15.1 in die Aufnahme 14.4 hineingedrückt werden kann. Auch ist es denkbar, dass der Schlauch 15.1 am oberen oder unteren Ende der Aufnahme 14.4 längsseitig in die Aufnahme 14.4 hineingeschoben wird. Die Elektronikkomponente 12 ist in der Figur 7 schematisch zur Vollständigkeit dargestellt.

In der weiteren Figur 8 ist ein vergleichbares zweites Funktionsteil 14 zur Figur 6 dargestellt. Allerdings besteht das Befüllungselement 15 in diesem Ausführungsbeispiel aus dem Kanal 15.2, der sich längsseits durch das zweite Funktionsteil 14, insbesondere den Träger 14.2, erstreckt. Im unteren Bereich 11.6 endet der Kanal 15.2 linksseitig, d. h. zur Innenwand 11.4 des Griffteils 11, so dass die Höhlung 11.3 von unten nach oben mit der Vergussmasse 19 ausgefüllt werden kann. Im oberen Bereich 11.7 ist ein flanschartiges Verbindungsstück 15.5 an dem Träger 14.2 angeordnet, in den ein Gegenverbindungsstück 15.5 vom zweiten Funktionsteil mit einem weiteren Kanal 15.2 oder einem Schlauch 15.1 eingreifen kann. Das zweite Funktionsteil 14 dichtet die zweite Öffnung 11.2 durch die vorgesehene Lamellendichtung 17 ab.

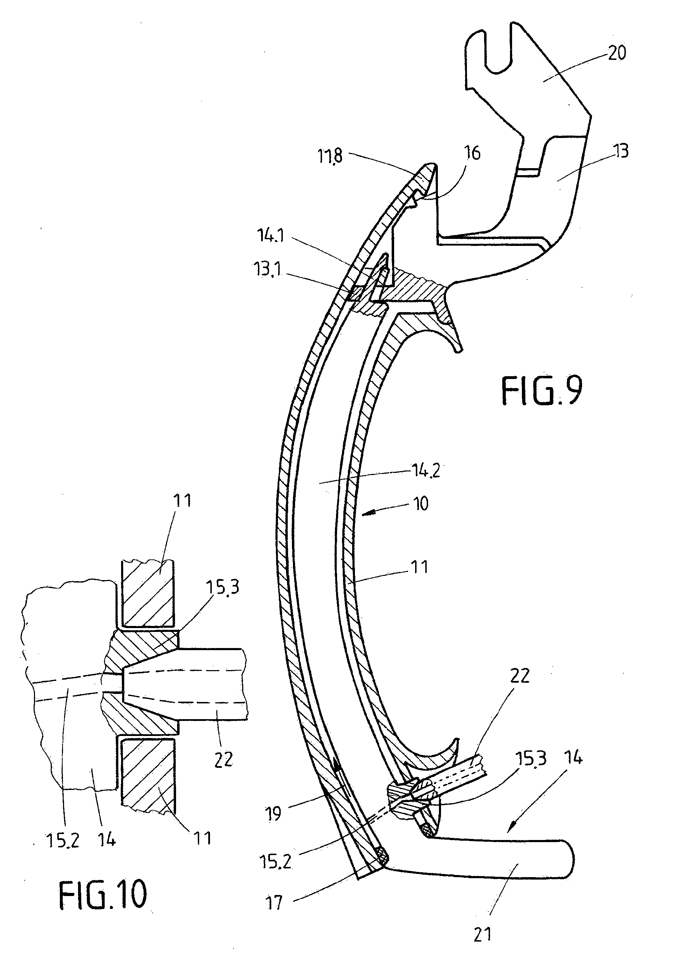

In der Figur 9 ist ein weiteres Ausführungsbeispiel der erfindungsgemäßen Handhabe 10 dargestellt. Hierbei verläuft das Befüllungselement 15 nicht vom oberen Bereich 11.7 bis zum unteren 11.6, sondern nur im unteren Bereich von einer Außenwand 11.5 des Griffteils 11 durch das zweite Funktionsteil 14 in die Höhlung 11.3. Dieses Ausführungsbeispiel setzt voraus, dass im zweiten Funktionsteil 14 genügend Platz für das erforderliche Befüllungselement 15 vorgesehen ist, was jedoch je nach Ausgestaltung und Positionierung der Elektronikkomponente 12 nicht der Fall sein muss. Das vorliegende Ausführungsbeispiel in Figur 9 weist auch ein erstes Funktionsteil 13 auf, um die weitere, nämlich die obere Öffnung 11.1, zu verschließen. Allerdings kann die Handhabe 10 auch ohne diese erste Öffnung 11.1 ausgestaltet sein, so dass nur die zweite Öffnung 11.2 im Griffteil 11 vorgesehen ist. Auch bei diesem, nicht dargestellten Fall, wird die Elektronikkomponente 12 durch das zweite Funktionsteil 14 in der Höhlung 11.3 gehalten und mit eingeführt.

Die Figur 10 zeigt eine Ausschnittsvergrößerung vom unteren Bereich 11.6 des Ausführungsbeispiels aus Figur 9. Dabei ist am zweiten Funktionsteil 14 ein Ansatzstutzen 15.3 für eine Düse der Spritzvorrichtung 22 vorgesehen. Dieser Ansatzstutzen 15.3 weist eine trichterförmige oder v-förmige Aufnahme für die Düsenspitze auf. Der Ansatzstutzen 15.3 führt selbst in das Befüllungselement 15, welches im vorliegenden Fall als Kanal 15.2 ausgebildet ist. Um eine Montage des zweiten Funktionsteils 14 im Griffteil 11 mit dem Ansatzstutzen 15.3 zu ermöglichen, kann der Ansatzstutzen 15.3 flexibel oder gummiartig ausgestaltet sein, so dass sich der Ansatzstutzen 15.3 beim Einführen des zweiten Funktionsteils 14 in die Höhlung 11.3 eindrücken lässt und in dem Durchbruch des Griffteils 11 nach Erreichen der Endposition des zweiten Funktionsteils 14 darin verrastet. Auch ist es denkbar, dass in dem Griffteil 11 ein offenes Langloch als Durchbruch für den Ansatzstutzen 15.3 vorgesehen ist, bei dem der Durchbruch selbst nach unten hin geöffnet ist, um den Ansatzstutzen 15.3 mit dem zweiten Funktionsteil 14 einführen zu können. Bei dieser Ausgestaltung der Erfindung kann der Ansatzstutzen 15.3 inflexibel oder starr ausgestaltet sein, so dass dieser materielleinheitlich und einstückig zum zweiten Funktionsteil 14 ausgestaltet sein kann. Kommt jedoch ein flexibler Ansatzstutzen 15.3 zum Einsatz, so kann dieser durch ein 2K-Spritzgussverfahren mit dem zweiten Funktionsteil 14 verbunden sein.

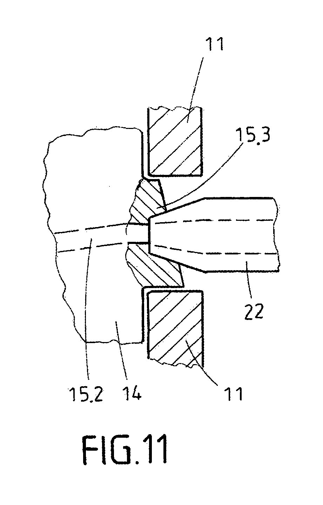

In der weiteren Figur 11 ist eine vergleichbare Ausschnittsvergrößerung vom unteren Bereich 11.6 des Ausführungsbeispiels aus Figur 9 dargestellt, wobei jedoch der Ansatzstutzen 15.3 andersartig ausgestaltet ist. Um das zweite Funktionsteil 14 möglichst auf einfache Art und Weise in das Griffteil 11 einführen zu können, weist der veränderte Ansatzstutzen 15.3 einen keilförmigen Querschnitt auf. Um diesen keilförmigen Querschnitt zu erreichen, ist die obere Kante des Ansatzstutzen 15.3 nicht so hoch ausgestaltet wie die untere Kante des Ansatzstutzen 15.3. Somit ist der Ansatzstutzen 15.3 aus Figur 11 direkt ähnlich zum Ansatzstutzen 15.3 aus Figur 10, wobei jedoch der Ansatzstutzen 15.3 diagonal von seiner oberen Kante zur unteren Kante durchschnitten worden ist. Durch die keilförmige Ausgestaltung des Ansatzstutzen 15.3 kann das gesamte Funktionsteil 14 einfach von unten in das Griffteil 11 bzw. in die entsprechende Höhlung 11.3 eingeführt werden. Dabei reicht das Spiel zwischen dem Funktionsteil 14 und dem Griffteil 11 aus, um auch den Ansatzstutzen 15.3 problemlos in die Höhlung 11.3 einzuführen. Da sich jedoch die Höhlung 11.3 mit steigender Höhe verjüngt, presst sich der Ansatzstutzen 15.3 in die Öffnung im Griffteil 11 ein, sobald das Funktionsteil 14 tief genug in die Höhlung 11.3 eingeführt worden ist. In dieser Öffnung verrastet der Ansatzstutzen 15.3 dann formschlüssig und sichert somit das gesamte Funktionsteil 14 formschlüssig in dem Griffteil 11. Ebenfalls weist dieser keilförmige Ansatzstutzen 15.3 eine trichterförmige oder v-förmige Aufnahme für die Düsenspitze der Spritzvorrichtung 22 auf. Bei diesem Ausführungsbeispiel kann der Ansatzstutzen 15.3 ebenfalls inflexibel oder starr ausgestaltet sein, so dass dieser materielleinheitlich und einstückig zum zweiten Funktionsteil 14 ausgestaltet sein kann.

### Bezugszeichenliste

- 10: Handhabe
- 11: Griffteil
- 11.1: erste Öffnung
- 11.2: zweite Öffnung
- 11.3: Höhlung
- 11.4: Innenwand
- 11.5: Außenwand
- 11.6: unterer Bereich
- 11.7: oberer Bereich
- 11.8: Rastmittel /Haltemittel
- 12: Elektronikkomponente
- 12.1: Stecker
- 12.2: elektrische Leitung
- 13: erstes Funktionsteil
- 13.1: Gegenrastmittel / Gegenhaltemittel
- 14: zweites Funktionsteil
- 14.1: Gegenrastmittel / Gegenhaltemittel
- 14.2: Träger für 12
- 14.3: Dichtungssteg /-lippe
- 14.4: Aufnahme für 15.1
- 15: Befüllungselement
- 15.1: Schlauch
- 15.2: Kanal
- 15.3: Ansatzstutzen
- 15.4: Kupplungsstück
- 15.5: Verbindungsstück
- 16: Entlüftungsloch
- 17: Dichtung
- 18: senkrechte Linie
- 19: Vergussmasse
- 20: Grifflager
- 21: Griffdom
- 22: Spritzvorrichtung / Düse

## Patentansprüche

1. Handhabe (10), insbesondere für ein Fahrzeug, mit
einem vom Benutzer zu erfassenden Griffteil (11), wobei das Griffteil (11) eine Höhlung (11.3) aufweist, in der wenigstens eine Elektronikkomponente (12) anordbar ist, und
zumindest ein erstes Funktionsteil (13) eine Öffnung (11.1,11.2) Höhlung (11.3) verschließt, und
die Höhlung (11.3) mit einer Vergussmasse (19) vergossen ist,
**dadurch gekennzeichnet,**
**dass** ein Befüllungselement (15) vorgesehen ist, durch welches die Vergussmasse (19) von außen in die Höhlung (11.3) einführbar ist, wobei das Befüllungselement (15) bei einer senkrechten Ausrichtung des Griffteils (11) im unteren Bereich (11.6) der Höhlung (11.3) endet.

2. Handhabe (10) nach Anspruch 1,
**dadurch gekennzeichnet,**
**dass** das erste Funktionsteil (13) eine obere Öffnung (11.1) der Höhlung (11.3) verschließt und das Befüllungselement (15) von oben senkrecht durch das Griffteil (11) bzw. die Höhlung (11.3) bis zum unteren Bereich (11.6) der Höhlung (11.3) angeordnet ist.

3. Handhabe (10) nach Anspruch 1 oder 2,
**dadurch gekennzeichnet,**
**dass** die Höhlung (11.3) im Griffteil (11) eine zweite Öffnung (11.2) aufweist, die insbesondere durch ein zweites Funktionsteil (14) verschließbar ist, wobei insbesondere die Funktionsteile (13,14) die jeweilige Öffnung (11.1,11.2) gas- und/oder feuchtigkeitsdicht verschließen und über Rast- und/oder Haltemittel (11.8) untereinander und/oder mit dem Griffteil (11) befestigt sind.

4. Handhabe (10) nach einem der vorhergehenden Ansprüche,
**dadurch gekennzeichnet,**
**dass** zumindest eine Elektronikkomponente (12) an oder in einem der Funktionsteile (13,14) angeordnet ist und innerhalb der Höhlung (11.3) fixiert ist.

5. Handhabe (10) nach einem der vorhergehenden Ansprüche,
**dadurch gekennzeichnet,**
**dass** ein Ansatzstutzen (15.3) für das Befüllungselement (15) vorgesehen ist, wodurch die Vergussmasse (19) von außen in das Befüllungselement (15) einführbar ist.

6. Handhabe (10) nach einem der vorhergehenden Ansprüche,
**dadurch gekennzeichnet,**
**dass** das Befüllungselement (15) durch wenigstens ein Funktionsteil (13,14) geführt ist und/oder daran angeordnet ist.

7. Handhabe (10) nach einem der vorhergehenden Ansprüche,
**dadurch gekennzeichnet,**
**dass** das Befüllungselement (15) durch einen Schlauch (15.1) und/oder einen Kanal (15.2) gebildet ist und insbesondere bei einer Kombination aus Schlauch (15.1) und Kanal (15.2) ein Kupplungsstück (15.4) zwischen beiden Elementen (15.1,15.2) vorgesehen ist.

8. Handhabe (10) nach Anspruch 7,
**dadurch gekennzeichnet,**
**dass** der Kanal (15.2) im Griffteil (11) und/oder in einem Funktionsteil (13,14) ausgebildet ist, wobei insbesondere der Kanal (15.2) zweiteilig ausgestaltet ist und Verbindungsstücke (15.5) vorgesehen sind.

9. Handhabe (10) nach Anspruch 7 oder 8,
**dadurch gekennzeichnet,**
**dass** der Kanal (15.2) als Bohrung im Griffteil (11) und/oder in einem Funktionsteil (13,14) ausgebildet ist.

10. Handhabe (10) nach einem der vorhergehenden Ansprüche,
**dadurch gekennzeichnet,**
**dass** der Schlauch (15.1) im Griffteil (11) und/oder im Funktionsteil (13,14) fixiert ist.

11. Handhabe (10) nach einem der vorhergehenden Ansprüche,
**dadurch gekennzeichnet,**
**dass** im oberen Bereich (11.7) der Höhlung (11.3) zumindest ein Entlüftungsloch (16) im Griffteil (11) oder dem ersten Funktionsteil (13) vorgesehen ist, durch das eine Entlüftung der Höhlung (11.3) beim Ausfüllen mit der Vergussmasse (19) möglich ist.

12. Verfahren zur Fertigung einer Handhabe (10), insbesondere nach einem der Ansprüche 1 bis 11, mit einem vom Benutzer zu erfassenden Griffteil (11),
wobei das Griffteil (11) eine Höhlung (11.3) aufweist, in der wenigstens eine Elektronikkomponente (12) angeordnet wird, und
zumindest ein erstes Funktionsteil (13) eine Öffnung (11.1,11.2) der Höhlung (11.3) verschließt, und
die Höhlung (11.3) mit einer Vergussmasse (19) vergossen ist,
**dadurch gekennzeichnet,**
**dass** die folgenden Schritte durchgeführt werden:
a) die Elektronikkomponente (12) wird in die Höhlung (11.3) des Griffteils (11) eingeführt
b) die Öffnung (11.1,11.2) der Höhlung (11.3) wird durch das erste Funktionsteil (13) verschlossen
c) das Griffteil (11) wird in eine im Wesentlichen senkrechte Ausrichtung (18) überführt
d) die Vergussmasse (19) wird von außen mittels eines Befüllungselements (15) nach unten in die Höhlung (11.3) geleitet und tritt dort aus dem Befüllungselement (15) aus.

13. Verfahren nach Anspruch 12,
**dadurch gekennzeichnet,**
**dass** die Höhlung (11.3) insgesamt zwei Öffnungen (11.1,11.2) aufweist, nämlich eine untere (11.2) und eine obere Öffnung (11.1), wobei in einem weiteren Schritt b1) ein zweites Funktionsteil (14) die zusätzliche Öffnung (11.1,11.2) verschließt.

14. Verfahren nach Anspruch 12 oder 13,
**dadurch gekennzeichnet,**
**dass** Schritt a) und b) gleichzeitig erfolgt, wobei wenigstens eine Elektronikkomponente (12) vom ersten und/oder vom zweiten Funktionsteil (13,14) gehalten wird.

15. Verfahren nach einem der Ansprüche 12 bis 14,
**dadurch gekennzeichnet,**
**dass** die Vergussmasse (19) von oben durch das Befüllungselement (15) in das Griffteil (11) gelangt und nach unten in die Höhlung (11.3) geleitet wird und dort aus dem Befüllungselement (15) austritt und von da aus in der Höhlung (11.3) hoch steigt.

## Claims

1. Handle (10), in particular for a vehicle, having
a grip part (11) that is grasped by the user, wherein the grip part (11) comprises a cavity (11.3) in which at least one electronic component (12) can be disposed, and
at least one first function part (13) seals off an opening (11.1, 11.2) of the cavity (11.3), and
a casting compound (19) is poured into the cavity (11.3), **characterised in that**
a filling element (15) is provided by which the casting compound (19) can be introduced into the cavity (11.3) from the outside, wherein the filling element (15) ends in the bottom area (11.6) of the cavity (11.3) when the grip part (11) is aligned vertically.

2. Handle (10) according to claim 1,
**characterised in that**
the first function part (13) seals off an upper opening (11.1) of the cavity (11.3), and the filling element (15) is introduced vertically from the top through the grip part (11), that is to say the cavity (11.3) as far as the bottom area (11.6) of the cavity (11.3).

3. Handle (10) according to claim 1,
**characterised in that**
the cavity (11.3) comprises a second opening (11.2) in the grip part (11), which in particular can be sealed off by a second function part (14), wherein the function parts (13, 14) seal off the respective openings (11.1, 11.2) particularly in gas- and/or moisture-impermeable manner and are attached to one another and/or to the grip part (11) via detent and/or retaining means (11.8).

4. Handle (10) according to any of the preceding claims,
**characterised in that**
at least one electronic component (12) is disposed on or in one of the function parts (13, 14) and is fixed inside the cavity (11.3).

5. Handle (10) according to any of the preceding claims,
**characterised in that**
an attachment spout (15.3) is provided for the filling element (15), through which the casting compound (19) can be introduced into the filling element (15) from the outside.

6. Handle (10) according to any of the preceding claims,
**characterised in that**
the filling element (15) passes through at least one function part (13, 14) and/or is disposed thereon.

7. Handle (10) according to any of the preceding claims,
**characterised in that**
the filling element (15) is constructed with a hose (15.1) and/or a channel (15.2), and particularly when a hose (15.1) and channel (15.2) are combined a coupling member (15.4) is provided between the two elements (15.1, 15.2).

8. Handle (10) according to claim 7,
**characterised in that**
the channel (15.2) is formed in the grip part (11) and/or in a function part (13, 14), wherein in particular the channel (15.2) has a two-part structure and connecting elements (15.5) are provided.

9. Handle (10) according to claims 7 or 8,
**characterised in that**
the channel (15.2) is formed as a drillhole in the grip part (11) and/or in a function part (13, 14).

10. Handle (10) according to any of the preceding claims,
**characterised in that**
the hose (15.1) is fixed in the grip part (11) and/or in the function part (13, 14).

11. Handle (10) according to any of the preceding claims,
**characterised in that**
at least one deaeration hole (16) is provided in the grip part (11) or in the first function part (13) in the upper area of the cavity (11.3), through which it is possible for air to escape from the cavity (11.3) when said cavity is filled with the casting compound (19).

12. Method for manufacturing a handle (10) particularly according to any of claims 1 to 11, having a grip part (11) that is grasped by the user,
wherein the grip part (11) comprises a cavity (11.3) in which at least one electronic component (12) is disposed, and
at least one first function part (13) seals off an opening (11.1, 11.2) of the cavity (11.3), and
a casting compound (19) is poured into the cavity (11.3), **characterised in that**
the following steps are carried out:
a) the electronic component (12) is introduced into the cavity (11.3) of the grip part (11),
b) the opening (11.1, 11.2) in the cavity (11.3) is sealed off by the first function part (13),
c) the grip part (11) is moved into an essentially vertical alignment (18),
d) the casting compound (19) is fed from the outside via a filling element (15) to the bottom of the cavity (11.3), where it exits the filling element (15).

13. Method according to claim 12,
**characterised in that**
the cavity (11.3) comprises two openings (11.1, 11.2) in all, one lower opening (11.2) and one upper opening (11.1), wherein in a further step b1) a second function part (14) seals off the additional opening (11.1, 11.2).

14. Method according to claim 12 or 13,
**characterised in that**
steps a) and b) are carried out simultaneously, wherein at least one electronic component (12) is retained by the first and/or the second function part (13, 14).

15. Method according to any of claims 12 to 14,
**characterised in that**
the casting compound (19) is introduced into the grip part (11) through the filling element (15) from the top and is fed to the bottom of the cavity (11.3), where it exits the filling element (15) and from there rises inside the cavity (11.3).

## Revendications

1. Poignée (10), notamment pour un véhicule automobile, comportant
une pièce de préhension (11) saisie par l'utilisateur, dans laquelle la pièce de préhension (11) présente une cavité (11.3), dans laquelle au moins un composant électronique (12) peut être disposé, et
au moins une première pièce fonctionnelle (13) obture une ouverture (11.1, 11.2) de cavité (11.3) et
la cavité (11.3) est coulée avec une pâte de moulage (19),
**caractérisée en ce que**
un élément de remplissage (15) est prévu, par l'intermédiaire duquel la pâte de moulage (19) peut être introduite dans l'extérieur dans la cavité (11.3), dans laquelle l'élément de remplissage (15) en cas d'alignement perpendiculaire de la pièce de préhension (11) termine dans la zone inférieure (11.6) de la cavité (11.3).

2. Poignée (10) selon la revendication 1,
**caractérisée en ce que**
la première pièce fonctionnelle (13) obture une ouverture supérieure (11.1) de la cavité (11.3) et l'élément de remplissage (15) est disposée en haut perpendiculairement à travers la pièce de préhension (11), respectivement la cavité (11.3) jusqu'à la zone inférieure (11.6) de la cavité (11.3).

3. Poignée (10) selon les revendications 1 ou 2,
**caractérisée en ce que**
la cavité (11.3) dans la pièce de préhension (11) présente une deuxième ouverture (11.2), qui peut être obturée notamment par une deuxième pièce fonctionnelle (14), dans laquelle notamment les pièces fonctionnelles (13, 14) obturent l'ouverture respective (11.1, 11.2) de manière étanche au gaz et/ou à l'humidité et sont fixées l'une sous l'autre et/ou avec la pièce de préhension (11) par l'intermédiaire d'un moyen d'encliquetage et/ou de retenue (11.8).

4. Poignée (10) selon une des revendications précédentes,
**caractérisée en ce que**
au moins un composant électronique (12) est disposé sur ou dans une des pièces fonctionnelles (13, 14) et est fixé à l'intérieur de la cavité (11.3).

5. Poignée (10) selon une des revendications précédentes,
**caractérisée en ce que**
un embout de prolongement (15.3) pour l'élément de remplissage (15) est prévu, moyennant quoi la pâte de moulage (19) peut être introduite de l'extérieur dans l'élément de remplissage (15).

6. Poignée (10) selon une des revendications précédentes,
**caractérisée en ce que**
l'élément de remplissage (15) est guidé à travers au moins une pièce fonctionnelle (13, 14) et/ou est disposé sur celle-ci.

7. Poignée (10) selon une des revendications précédentes,
**caractérisée en ce que**
l'élément de remplissage (15) est formé par un tuyau flexible (15.1) et/ou un canal (15.2) et notamment en cas de combinaison d'un tuyau flexible (15.1) et d'un canal (15.2), une pièce d'accouplement (15.4) est prévue entre les deux éléments (15.1, 15.2).

8. Poignée (10) selon la revendication 7,
**caractérisée en ce que**
le canal (15.2) est réalisé dans la pièce de préhension (11) et/ou dans une pièce fonctionnelle (13, 14), dans laquelle notamment le canal (15.2) est conçu en deux parties et des pièces de liaison (15.5) sont prévues.

9. Poignée (10) selon les revendications 7 ou 8,
**caractérisée en ce que**
le canal (15.2) est conçu comme un alésage dans la pièce de préhension (11) et/ou dans une pièce fonctionnelle (13, 14).

10. Poignée (10) selon une des revendications précédentes,
**caractérisée en ce que**
le tuyau flexible (15.1) est fixé dans la pièce de préhension (11) et/ou dans la pièce fonctionnelle (13, 14).

11. Poignée (10) selon une des revendications précédentes,
**caractérisé en ce que**
dans la zone supérieure (11.7) de la cavité (11.3), au moins un trou de purge d'air (16) est prévu dans la pièce de préhension (11) ou dans la première pièce fonctionnelle (13), à travers lequel une purge d'air de la cavité (11.3) est possible lors du remplissage avec la pâte de moulage (19).

12. Procédé de fabrication d'une poignée (10), notamment selon une des revendications 1 à 11, comportant une pièce de préhension (11) saisie par l'utilisateur,
dans lequel la pièce de préhension (11) présente une cavité (11.3), dans laquelle au moins un composant électronique (12) est disposé, et
au moins une première pièce fonctionnelle (13) obture une ouverture (11.1, 11.2) de la cavité (11.3), et
la cavité (11.3) est coulée avec une pâte de moulage (19),
**caractérisé en ce que**
les étapes suivantes sont mises en oeuvre :
a) le composant électronique (12) est introduit dans la cavité (11.3) de la pièce de préhension (11),
b) l'ouverture (11.1, 11.2) de la cavité (11.3) est obturé par la première pièce fonctionnelle (13),
c) la pièce de préhension (11) est amenée dans un alignement (18) essentiellement perpendiculaire,
d) la pâte de moulage (19) est guidée de l'extérieur au moyen d'un élément de remplissage (15) vers le bas dans la cavité (11.3) et ressort à cet endroit de l'élément de remplissage (15).

13. Procédé selon la revendication 12,
**caractérisé en ce que**
la cavité (11.3) présente au total deux ouvertures (11.1, 11.2), à savoir une ouverture inférieure (11.2) et une ouverture supérieure (11.1), dans lequel dans une autre étape b1) une deuxième pièce fonctionnelle (14) obture l'ouverture supplémentaire (11.1, 11.2).

14. Procédé selon les revendications 12 ou 13,
**caractérisé en ce que**
les étapes a) et b) ont lieu simultanément, dans lequel au moins un composant électronique (13) est maintenu par la première et/ou deuxième pièce fonctionnelle (13, 14).

15. Procédé selon une des revendications 12 à 14,
**caractérisé en ce que**
la pâte de moulage (19) parvient d'en haut à travers l'élément de remplissage (15) dans la pièce de préhension (11) et est guidée vers le bas dans la cavité (11.3) et ressort à cet endroit de l'élément de remplissage (15) et remonte à partir de là dans la cavité (11.3).
